# EUROPÄISCHE PATENTANMELDUNG

(11) **EP 4 303 103 A1**
(43) Veröffentlichungstag der Anmeldung: **10.01.2024**
(21) Anmeldenummer: 23184098.4
(22) Anmeldetag: 07.07.2023
(51) Int. Cl.: B62D 35/00, B62D 37/02

(54) **VERSTELLBARES SPOILERSYSTEM FÜR EIN KRAFTFAHRZEUG UND KRAFTFAHRZEUG MIT EINEM SOLCHEN SPOILERSYSTEM**

(30) Priorität: 08.07.2022 DE 102022117053
(71) Anmelder: paragon GmbH & Co. KGaA, 33129 Delbrück (DE)
(72) Erfinder: Sarthak, Mishra, 86899 Landsberg am Lech (DE); Asendorf, Sven, 82211 Herrsching (DE)
(74) Vertreter: advotec.

(57) **Zusammenfassung**

Die Erfindung betrifft ein Spoilersystem für ein Kraftfahrzeug, umfassend eine Auswerte- und Steuereinrichtung (12), ein Fahrzeugbauteil (14), mindestens ein Spoilerelement (16), das verstellbar an dem Fahrzeugbauteil (14) angeordnet ist, und mindestens einen Lidar-Sensor (18), der dazu eingerichtet ist, eine Windgeschwindigkeit (22) und/oder eine Windrichtung (23) und/oder eine Windböe und/oder ein Windverteilungsprofil (24) eines Fahrzeugumfelds zu ermitteln, wobei die Auswerte- und Steuereinrichtung (12) dazu eingerichtet ist, zumindest in Abhängigkeit von der ermittelten Windgeschwindigkeit (22) und/oder der ermittelten Windböe und/oder der ermittelten Windrichtung (23) und/oder dem ermittelten Windverteilungsprofil (24) einen Anstellwinkel α des mindestens einen Spoilerelements (16) relativ zu dem Fahrzeugbauteil (14) basierend auf vorbestimmten CFD-Simulationsdaten des mindestens einen Spoilerelements (16) einzustellen.

## Beschreibung

Die Erfindung betrifft ein Spoilersystem für ein Kraftfahrzeug gemäß einem der Ansprüche 1 oder 2. Ferner betrifft die Erfindung ein Kraftfahrzeug mit mindestens einem erfindungsgemäßen Spoilersystem. Ebenfalls betrifft die Erfindung ein Verfahren zum Einstellen eines Spoilerelements gemäß einem der Ansprüche 13 oder 14.

Ein gattungsgemäßes Spoilersystem für ein Kraftfahrzeug, das mindestens ein Spoilerelement umfasst, ist grundsätzlich aus dem Stand der Technik bekannt. Unter einem Spoiler ist ein die aerodynamischen Verhältnisse eines Fahrzeuges günstig beeinflussendes Blech- oder Kunststoffelement zu verstehen, das an einer Karosserie eines Kraftfahrzeuges und/oder einem sonstigen Fahrzeugbauteil angeordnet ist und das durch Beeinflussung einer Luftströmung um das Fahrzeug z. B. eine bessere Bodenhaftung bzw. einen höheren Anpressdruck oder eine Verminderung des Luftwiderstandes bewirkt.

Aus dem Stand der Technik ist es ebenfalls bekannt, dass ein Spoiler ein- und ausfahrbar an einer Fahrzeugkarosserie angeordnet ist. Ein derartiger Spoiler kann beispielsweise ab dem Erreichen einer vorbestimmten Fahrzeuggeschwindigkeit ausgefahren werden, um derart einen Anpressdruck des Fahrzeuges auf die Fahrbahn zu erhöhen. Hierdurch wird dem Fahrer eine bessere und stabilere Kontrolle über das Fahrzeug auch bei einer hohen Geschwindigkeit ermöglicht.

Aus der US 4 810 022 A ist beispielsweise ein Spoiler bekannt, der an einer Front-und/oder einer Heckpartie eines Kraftfahrzeugs angeordnet sein kann. Der Spoiler kann in Abhängigkeit von verschiedenen Bedingungen in seiner Position verstellt werden. Beispielsweise kann der Spoiler in Abhängigkeit von einer Fahrzeuggeschwindigkeit, einem Seitenwind oder einer Straßenbedingung, beispielsweise Nässe oder Trockenheit auf der Straße, ausgefahren werden. Zur Messung der Bedingungen kommen verschiedene Sensoren zum Einsatz, durch die die Fahrzeuggeschwindigkeit, ein Seitenwind und/oder ein Traktionsvermögen der Straße ermittelt werden kann. Auf der Grundlage der so ermittelten Messwerte kann der Spoiler zwischen einer eingefahrenen Position und einer ausgefahrenen Position verstellt werden. Wird ein Heckspoiler auf Basis mindestens einer dieser Bedingungen in die ausgefahrene Position verstellt, kann ein Luftwiderstand des Fahrzeuges gesenkt und ggf. ein heckseitiger Anpressdruck des Fahrzeuges auf die Fahrbahn erhöht werden. Wird ein Frontspoiler auf Basis mindestens einer dieser Bedingungen in die ausgefahrene Position verstellt, kann ein Anpressdruck des Fahrzeuges auf die Fahrbahn insgesamt erhöht werden. Wird ein betreffender Spoiler wieder eingefahren, verringert sich ein Anpressdruck und/oder erhöht sich ein Luftwiderstand entsprechend.

Aus der US 5 120 105 A ist eine Spoileranordnung bekannt, die in einem Heckbereich eines Kraftfahrzeuges, insbesondere eines Personenkraftwagens, angeordnet ist. Die Spoileranordnung hat zwei Betriebsstellungen, nämlich eine eingefahrene Nichtbetriebsstellung und eine ausgefahrene Betriebsstellung. In der ausgefahrenen Betriebsstellung kann ein Anströmquerschnitt der Spoileranordnung durch Ausfahren weiterer Elemente vergrößert werden. Neben einer Reduzierung des Luftwiderstandes trägt die Vergrößerung des Anströmquerschnittes zu einer Kühlung des heckseitig angeordneten Motors des Kraftfahrzeuges bei.

Aus der US 9 802 657 B2 ist ein Spoiler bekannt, der in zwei unterschiedliche ausgefahrene Positionen verbracht werden kann. Ab Erreichen einer ersten Fahrzeuggeschwindigkeit wird der Spoiler in eine erste Ausfahrposition verstellt. Ab Erreichen einer zweiten Fahrzeuggeschwindigkeit, die größer als die erste Fahrzeuggeschwindigkeit ist, wird der Spoiler in eine zweite Ausfahrposition verstellt, in der der Spoiler weiter ausgefahren ist als in der ersten Ausfahrposition. Die erste Ausfahrposition dient einer Verringerung des Luftwiderstands und wirkt dadurch kraftstoffeinsparend. Die zweite Ausfahrposition dient zur Reduzierung eines Fahrzeugauftriebes bzw. zu einer Erhöhung eines Anpressdruckes des Fahrzeuges auf die Fahrbahn.

Aus der US 10 220 892 B1 ist ein Heckspoiler bekannt, der an einem Heck eines Kraftfahrzeugs angeordnet ist. Der Spoiler ist an dem Heck mit zwei voneinander unabhängigen Teilen montiert. Ein erster Sensor, der als Rad-Sensor konfiguriert ist, dient dazu, eine Drehgeschwindigkeit des Fahrzeugrades zu erfassen. Ein zweiter Sensor ist dazu ausgebildet, eine Giergeschwindigkeit des Fahrzeuges zu erfassen. Ein dritter Sensor ist dazu eingerichtet, eine Geschwindigkeit eines Umgebungsluftstroms relativ zu dem Fahrzeug zu erfassen. Zusätzlich zu den drei vorgenannten Sensoren kann durch einen weiteren Sensor ein Drehwinkel eines Lenkrades des Fahrzeuges erfasst werden. Unter Berücksichtigung sämtlicher Messwerte, die von den Sensoren an ein Steuergerät übermittelt werden, kann das Steuergerät zumindest einen Teil des Heckspoilers relativ zu der Fahrzeugkarosserie verstellen, um derart einen aerodynamischen Abtrieb des Fahrzeuges situationsbedingt zu verändern.

Obgleich aus dem Stand der Technik bereits eine Vielzahl von Steuerungsmöglichkeiten zum Verstellen eines Fahrzeugspoilers bekannt ist, besteht weiterhin ein Bedarf an einer verbesserten, insbesondere situationsoptimierten Steuerung eines Spoilers an einem Fahrzeug, um derart die aerodynamischen Eigenschaften des Fahrzeuges situationsoptimiert beeinflussen zu können. Zudem haben die bekannten Spoiler im Stand der Technik maximal drei unterschiedliche Bewegungspositionen, die jeweils abhängig von vorbestimmten Sensormessungen sind. Ebenfalls werden im Stand der Technik nicht sämtliche relevanten Umgebungs- und/oder Fahrzeug- und/oder Fahrbetriebsparameter bei dem Verstellen eines Spoilers berücksichtigt.

Somit ist es eine Aufgabe der vorliegenden Erfindung, ein Spoilersystem derart weiterzuentwickeln, dass die aerodynamischen Eigenschaften eines Fahrzeuges, an dem ein derartiges Spoilersystem angeordnet ist, in vorbestimmten Fahr- und/oder Umgebungssituationen verbessert sind. Insbesondere ist es eine Aufgabe und/oder ein Ziel der vorliegenden Erfindung, die Reichweite eines Fahrzeuges mit einem solchen Spoilersystem bei unterschiedlichen Reisegeschwindigkeiten zu erhöhen und/oder ab einer vorbestimmten Grenzgeschwindigkeit eine zusätzliche Fahr- und/oder Aerodynamikunterstützung zu bieten.

Die Aufgabe wird durch ein Spoilersystem mit den Merkmalen des Anspruchs 1 und/oder durch ein Spoilersystem mit den Merkmalen des Anspruchs 2 gelöst. Ebenfalls wird die Aufgabe durch ein Verfahren zum Einstellen eines Anstellwinkels eines Spoilerelements gelöst, das die Verfahrensschritte gemäß dem Anspruch 13 und/oder gemäß dem Anspruch 14 umfasst. Es versteht sich, dass die beiden beanspruchten Spoilersysteme auch in Kombination miteinander eingesetzt werden können, jedoch auch getrennt voneinander zur Lösung der erfindungsgemäßen Aufgabe geeignet sind. Grundsätzlich spiegeln die beiden Spoilersysteme zwei alternative, sich jedoch grundsätzlich in technischer Hinsicht auch ergänzen könnende Lösungen der vorstehend genannten Aufgabe wider. Selbiges gilt auch für die beiden beanspruchten Verfahren.

Vorteilhafte Ausführungsformen der Erfindung sind Gegenstand der abhängigen Ansprüche. In den Rahmen der Erfindung fallen sämtliche Kombinationen aus mindestens zwei in der Beschreibung, den Ansprüchen und/oder den Figuren offenbarten Merkmalen. Es versteht sich, dass die zu dem Spoilersystem gemachten Ausführungen sich in äquivalenter Weise auf ein Kraftfahrzeug mit mindestens einem Spoilersystem und/oder auf die erfindungsgemäß beanspruchten Verfahren beziehen, ohne für dieses bzw. diese redundant genannt zu werden. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden. Dies ist insbesondere für eine sprachliche Überführung einer zu einem Spoilersystem gemachten Ausführung auf eines der erfindungsgemäß beanspruchten Verfahren von Relevanz.

Erfindungsgemäß ist in einem ersten Aspekt ein Spoilersystem für ein Kraftfahrzeug vorgeschlagen, umfassend eine Auswerte- und Steuereinrichtung, ein Fahrzeugbauteil, mindestens ein Spoilerelement, das verstellbar an dem Fahrzeugbauteil angeordnet ist, und mindestens einen Lidar-Sensor, der dazu eingerichtet ist, eine Windgeschwindigkeit und/oder eine Windrichtung und/oder eine Windböe in einem Fahrzeugumfeld und/oder ein Windverteilungsprofil eines Fahrzeugumfelds zu ermitteln, wobei die Auswerte-und Steuereinrichtung dazu eingerichtet ist, zumindest in Abhängigkeit von der ermittelten Windgeschwindigkeit und/oder der ermittelten Windböe und/oder der ermittelten Windrichtung und/oder dem ermittelten Windverteilungsprofil einen Anstellwinkel des mindestens einen Spoilerelements relativ zu dem Fahrzeugbauteil basierend auf vorbestimmten CFD-Simulationsdaten des mindestens einen Spoilerelements einzustellen. Die Abkürzung "CFD" steht für im Englischen für "*computer fluid dynamics",* worunter numerische Strömungsmechanik und/oder numerische Strömungssimulation zu verstehen ist.

Erfindungsgemäß ist in einem zweiten Aspekt ein Spoilersystem für ein Kraftfahrzeug vorgeschlagen, umfassend eine Auswerte- und Steuereinrichtung, ein Fahrzeugbauteil und mindestens ein Spoilerelement, das verstellbar an dem Fahrzeugbauteil angeordnet ist, wobei die Auswerte- und Steuereinrichtung dazu eingerichtet ist, eine Position und/oder eine Anordnung des Kraftfahrzeuges innerhalb einer Fahrzeugkolonne, die mehrere Fahrzeuge umfasst, zu ermitteln und zumindest in Abhängigkeit von der ermittelten Position und/oder Anordnung einen Anstellwinkel des mindestens einen Spoilerelements relativ zu dem Fahrzeugbauteil basierend auf vorbestimmten CFD-Simulationsdaten des mindestens einen Spoilerelements einzustellen.

Erfindungsgemäß ist in einem dritten Aspekt ein Verfahren zum Einstellen eines Anstellwinkels eines Spoilerelements, das verstellbar an einem Fahrzeugbauteil eines Kraftfahrzeuges angeordnet ist, vorgeschlagen, wobei das Verfahren mindestens die folgenden Schritte umfasst: Bereitstellen von vorbestimmten CFD-Simulationsdaten des mindestens einen Spoilerelements; Ermitteln einer Windgeschwindigkeit und/oder einer Windrichtung und/oder einer Windböe und/oder eines Windverteilungsprofils durch einen Lidar-Sensor; und Einstellen eines Anstellwinkels des mindestens einen Spoilerelements relativ zu dem Fahrzeugbauteil basierend auf vorbestimmten CFD-Simulationsdaten des mindestens einen Spoilerelements zumindest in Abhängigkeit von der ermittelten Windgeschwindigkeit und/oder der ermittelten Windrichtung und/oder der ermittelten Windböe und/oder dem ermittelten Windverteilungsprofil.

Erfindungsgemäß ist in einem vierten Aspekt ein Verfahren zum Einstellen eines Anstellwinkels eines Spoilerelements, das verstellbar an einem Fahrzeugbauteil eines Kraftfahrzeuges angeordnet ist, vorgeschlagen, wobei das Verfahren mindestens die folgenden Schritte umfasst: Bereitstellen von vorbestimmten CFD-Simulationsdaten des mindestens einen Spoilerelements; Ermitteln einer Position und/oder einer Anordnung des Kraftfahrzeuges innerhalb einer Fahrzeugkolonne, die mehrere Fahrzeuge umfasst; und Einstellen eines Anstellwinkels des mindestens einen Spoilerelements relativ zu dem Fahrzeugbauteil basierend auf vorbestimmten CFD-Simulationsdaten des mindestens einen Spoilerelements in Abhängigkeit von der ermittelten Position und/oder Anordnung des Kraftfahrzeuges innerhalb der Fahrzeugkolonne.

Das Spoilerelement ist in seinem bestimmungsgemäßen Gebrauch vorzugsweise dazu ausgebildet, die aerodynamischen Verhältnisse eines Kraftfahrzeuges auf ökonomisch günstige (durch Verringerung des Energieverbrauchs) und/oder die Fahrzeugkontrolle verbessernde Weise zu beeinflussen. Ein Spoilerelement umfasst beispielsweise ein Blech- und/oder Kunststoffelement, das an einer Karosserie eines Kraftfahrzeuges und/oder einem sonstigen Fahrzeugbauteil angeordnet ist und das vorzugsweise durch Beeinflussung einer Luftströmung um das Fahrzeug z. B. eine bessere Bodenhaftung bzw. einen höheren Anpressdruck oder eine Verminderung des Luftwiderstandes bewirkt.

Unter einer Fahrzeugkolonne sind vorliegend mindestens zwei Kraftfahrzeuge zu verstehen, die in einem vorbestimmten oder sich verändernden Abstand hintereinander herfahren. Bevorzugt beeinflusst eine aerodynamische Strömungsführung des vorausfahrenden Fahrzeuges eine aerodynamische Anströmung des dahinterfahrenden Fahrzeuges. Insbesondere kommt es je nach Fahrtgeschwindigkeit und/oder je nach einem Abstand zwischen zwei Fahrzeugen zu einer Windschattenbildung durch das jeweils vorausfahrende Fahrzeug. Besonders bevorzugt umfasst die Fahrzeugkolonne mehr als zwei Fahrzeuge. Es sei erwähnt, dass in der vorliegenden Offenbarung die Begriffe "Kraftfahrzeug" und "Fahrzeug" in synonymer Weise Verwendung finden.

Erfindungsgemäß ist es bevorzugt, wenn die Auswerte- und Steuereinrichtung dazu eingerichtet ist, den Anstellwinkel des mindestens einen Spoilerelements, insbesondere stufenlos oder zumindest mit einer vorbestimmten Einstellauflösung, innerhalb eines vorbestimmten Winkelbereiches von beispielhaft 0,1° bis 3° einzustellen. Besonders bevorzugt ist der Winkelbereich durch eine Winkelstellung des mindestens einen Spoilerelements in einer eingefahrenen Stellung (relativ zu dem Fahrzeugbauteil betrachtet) sowie durch eine Winkelstellung des mindestens einen Spoilerelements in einer insbesondere vollständig ausgefahrenen Stellung begrenzt. In der eingefahrenen Stellung ist das mindestens eine Spoilerelement vorzugsweise flächenbündig mit dem umliegenden Fahrzeugbauteil, so dass in der eingefahren Stellung keine aerodynamische Beeinflussung des Fahrverhaltens des Fahrzeuges durch das Spoilerelement hervorgerufen ist. Die ausgefahrene Stellung definiert sich vorzugsweise über eine Stellung des Spoilerelements relativ zu dem Fahrzeugbauteil, bei der das Fahrzeug bei einer vorbestimmten oberen Grenzgeschwindigkeit einen maximalen Abtrieb durch das Spoilerelement erfährt.

Erfindungsgemäß werden unter anderem die Vorteile erreicht, dass durch die insbesondere situationsoptimierte Einstellung des Anstellwinkels des mindestens einen Spoilerelements ein optimales Verhältnis zwischen einem durch das mindestens eine Spoilerelement erzeugten Auftrieb und einem durch das mindestens eine Spoilerelement bedienten Luftwiderstand erzielt werden kann. Insbesondere kann diese aerodynamische Optimierung durch die Einstellung des Anstellwinkels in Abhängigkeit von einer Luftströmung, insbesondere einer Windgeschwindigkeit und/oder einer Windrichtung und/oder einer Windböe und/oder einem Windverteilungsprofil in der Fahrzeugumgebung und/oder in Abhängigkeit von einer Position und/oder einer Anordnung des betreffenden Fahrzeuges innerhalb einer Fahrzeugkolonne erfolgen.

Eine aerodynamische Effizienz des Fahrzeugs hängt vorzugsweise von einem eingestellten Anstellwinkel des Spoilerelements, das vorzugsweise als Steuerfläche dient, ab. Ein einzustellender Anstellwinkel des Spoilerelements kann bevorzugt in Abhängigkeit von insbesondere plötzlich auftretenden atmosphärischen (Luft-)Veränderungen, wie einer Windböe und/oder einem Windstoß situationsoptimiert manipuliert werden. Die durch den Lidar-Sensor gemessenen atmosphärischen Veränderungen werden vorzugsweise durch eine kommunikative Kopplung zwischen dem Lidar-Sensor und der Auswerte- und Steuereinrichtung (engl.: *executive control unit*) an diese übermittelt. Die Übermittlung erfolgt vorzugsweise in Form von bereits vorausgewerteten Steuersignalen und/oder in Form von durch den Lidar-Sensor erfassten Rohdaten. Die Auswerte-und Steuereinrichtung ist vorzugsweise dazu ausgebildet, die durch den Lidar-Sensor erfassten Rohdaten derart auszuwerten, dass daraus jeweils Steuersignale zum Einstellen des Anstellwinkels des Spoilerelements generiert werden können.

Alternativ oder ergänzend ist es erfindungsgemäß möglich, eine Aerodynamik des betreffenden Fahrzeuges, in dem mindestens ein erfindungsgemäßes Spoilersystem verbaut ist, in Abhängigkeit von einer Position und/oder einer Anordnung des Fahrzeuges während einer Kolonnenfahrt zu optimieren. Das Fahrzeug ist erfindungsgemäß nämlich in der Lage, den Anstellwinkel des mindestens einen Spoilerelements in Abhängigkeit von der Position und/oder Anordnung innerhalb einer derartigen Kolonne anzupassen. Obgleich ein Kopffahrzeug einer Fahrzeugkolonne von einer derartigen Optimierung nicht profitiert, kann erfindungsgemäß zumindest für die dahinter fahrenden Fahrzeuge durch die positions- und/oder anordnungsbezogene Einstellung des Anstellwinkels eine aerodynamische Anströmung des jeweiligen Fahrzeuges optimiert, insbesondere ein jeweiliger Luftwiderstand verringert werden. Hierdurch kann, bezogen auf die gesamte Fahrzeugkolonne, ein Energieverbrach, insbesondere ein Kraftstoffverbrauch, verringert werden.

Die Auswerte- und Steuereinrichtung ist vorzugsweise dazu eingerichtet, in Abhängigkeit von den durch den Lidar-Sensor ermittelten luftströmungsbezogenen Umgebungsparametern und/oder der ermittelten Position und/oder Anordnung des Fahrzeuges innerhalb einer Fahrzeugkolonne einen jeweils einzustellenden Anstellwinkel zu berechnen. Weiterhin ist die Auswerte- und Steuereinrichtung vorzugsweise dazu eingerichtet, den Anstellwinkel des mindestens einen Spoilerelements bei sich veränderndem luftströmungsbezogenem Umgebungsparameter und/oder einer sich verändernden Position und/oder Anordnung des Fahrzeuges innerhalb einer Fahrzeugkolonne erneut zu berechnen und einzustellen. Derart kann in situ auf sich verändernde Bedingungen reagiert werden. Die Grundlage für die Berechnung des Anstellwinkels wird vorzugsweise durch den zuvor ermittelten CFD-Simulationsdatensatz gelegt. Besonders bevorzugt erfolgt die Erfassung von Umgebungs- und/oder Fahrzeugpositionsparametern fortlaufend oder zumindest in vorbestimmten Zeitintervallen, um derart eine(n) kontinuierliche(n), besonders bevorzugt geschlossene(n) Regelkreislauf bzw. Rechenschleife bzw. Dauerschleife auszubilden. Die Auswerte- und Steuereinrichtung und/oder der Lidar-Sensor kann/können dazu eingerichtet sein, ermittelte Informationen über Umgebungsparameter, insbesondere eine Windgeschwindigkeit und/oder eine Windrichtung und/oder eine Windböe und/oder ein Windverteilungsprofil, und/oder Informationen über eine Position und/oder Anordnung des Kraftfahrzeuges innerhalb einer Fahrzeugkolonne mit einer externen Stelle, beispielsweise einem Hostserver oder einem anderen Fahrzeug, zu teilen. Derart geteilte Daten können beispielsweise dazu genutzt werden, ein zugrundeliegendes Berechnungsmodell für die Einstellung des Anstellwinkels und/oder ein CFD-Simulationsmodell möglichst fortlaufend zu optimieren.

In einer bevorzugten Ausführungsform umfassen die vorbestimmten CFD-Simulationsdaten zu einer Vielzahl von simulierten Anstellwinkeln jeweils mindestens eine aerodynamische Kenngröße, insbesondere einen Luftwiderstandsbeiwert und/oder einen Luftreibungsbeiwert und/oder einen aerodynamischen Wirkungsgrad des mindestens einen Spoilerelements bei unterschiedlichen Fahrzeuggeschwindigkeiten und/oder Windgeschwindigkeiten und/oder Windrichtungen und/oder Windverteilungsprofilen. Besonders bevorzugt wird eine Vielzahl von CFD-Simulationen für ein Spoilerelement im Voraus durchgeführt. Hierzu wird vorzugsweise ein CAD-Datensatz bzw. ein CAD-Modell des Spoilerelements und/oder des Fahrzeuges mit dem Spoilerelement für die nachfolgende CFD-Simulation bereitgestellt. In dem CAD-Modell ist vorzugsweise das Spoilerelement in einem an dem Fahrzeug verbauten Zustand dargestellt. Besonders bevorzugt kann ein Anstellwinkel des Spoilerelements relativ zu einem umgebenden Fahrzeugbauteil für die CFD-Simulation in dem CAD-Modell eingestellt werden. Darauffolgend wird vorzugsweise bei einem festgelegten Anstellwinkel eine Vielzahl von Simulationen für unterschiedliche Anström- und/oder Windbedingungen und/oder Fahrzeuggeschwindigkeiten durchgeführt. Die Abkürzung "CAD" beschreibt im Englischen "computer aided design", worunter rechnerunterstütztes Konstruieren von Bauteilen zu verstehen ist. Besonders bevorzugt werden diesen Simulationen als Referenzgrößen für ein Referenzfahrzeug ohne ein Spoilerelement oder zumindest bei einem Anstellwinkel von 0° relativ zu dem umliegenden Fahrzeugbauteil durchgeführt. Mit anderen Worten werden vorzugsweise aerodynamische Daten des Referenzfahrzeugs ohne Spoileranstellung (d. h. bei 0°) durch numerische CFD-Simulationen berechnet. Zudem werden vorzugsweise Simulationen mit ausgelenktem Spoilerelement bei verschiedenen Anstellwinkeln und bei unterschiedlichen Windgeschwindigkeiten und/oder Windrichtungen durchgeführt. Daraus ergibt sich vorzugsweise eine Effizienz des Spoilerelements. Diese Effizient drückt vorzugsweise aus, wie stark ein Luftwiderstand und/oder ein Auftrieb des Fahrzeuges bei verschiedenen Anstellwinkeln, jeweils bei verschiedenen Windgeschwindigkeiten, reduziert werden kann/können. Besonders bevorzugt kann zur Berechnung weiterer Zwischenwerte zwischen den durch die CFD-Simulationen ermittelten Effizienzwerten interpoliert werden. Daraus ergibt sich vorzugsweise eine Anstellwinkelsteuerfunktion, die die Abhängigkeit des Anstellwinkels des Spoilerelements von der Windgeschwindigkeit und/oder der Windrichtung relativ zu dem Spoilerelement beschreibt. Besonders bevorzugt umfasst eine derartige Anstellwinkelsteuerfunktion weitere Parameter, wie beispielsweise eine Fahrzeuggeschwindigkeit, um auch deren Einfluss auf den Anstellwinkel miteinzubeziehen. Auf Grundlage dieser Anstellwinkelsteuerfunktion kann vorzugsweise im Betrieb des Spoilersystems der Anstellwinkel des Spoilerelements in Abhängigkeit von den durch den Lidar-Sensor ermittelten Windverhältnissen eingestellt werden.

Alternativ oder ergänzend kann der CFD-Datensatz auch ermittelt werden, indem beispielsweise zunächst bei einer vorbestimmten, konstanten Windgeschwindigkeit und einem vorbestimmten Anstellwinkel des Spoilerelements ein Referenz-Luftwiderstandsbeiwert bzw. ein Referenz-Strömungswiderstandsbeiwert durch CFD-Simulation bestimmt wird. Danach kann vorzugsweise die Windgeschwindigkeit, bevorzugt bei gleichbleibendem Anstellwinkel variiert und derart besonders bevorzugt eine Abweichung von dem Referenz-Strömungswiderstandsbeiwert ermittelt werden. Im Anschluss daran kann beispielsweise eine derartige Simulationsprozedur für eine Mehrzahl von Anstellwinkeln wiederholt werden. Hieraus kann vorzugsweise ein CFD-Datensatz für das Spoilerelement generiert werden.

Es versteht sich, dass die Möglichkeiten zur Erzeugung der CFD-Simulationsdaten nur beispielhaft zu verstehen sind und es grundsätzlich gleichgültig ist, welche Parameter (Anstellwinkel und/oder Windgeschwindigkeit) bei einer CFD-Simulation zunächst konstant gehalten werden.

Die Anstellwinkelsteuerfunktion kann in ähnlicher Weise auch zur Einstellung des Anstellwinkels bei einer Fahrt des Fahrzeuges innerhalb einer Fahrzeugkolonne ermittelt werden. Dabei kann es bevorzugt sein, wenn Simulationsdaten einer derartigen Kolonnenfahrt als Grundlage für die Ermittlung der Anstellwinkelsteuerfunktion dienen. Im Falle einer Fahrt in einer Fahrzeugkolonne wird der Anstellwinkel vorzugsweise durch CFD-Simulationen in Abhängigkeit von der Position des Fahrzeugs in der Fahrzeugkolonne eingestellt. In diesem Fall können die Fahrzeuge im Betrieb des Spoilersystems vorzugsweise miteinander kommunizieren und Informationen über ihre Position innerhalb der Fahrzeugkolonne austauschen. Mithilfe von CFD-Simulationen werden vorzugsweise der jeweilige Luftwiderstand und/oder der jeweilige Auftrieb für jedes Fahrzeug je nach Position und/oder Anordnung innerhalb der Fahrzeugkolonne getrennt voneinander und bei verschiedenen Fahrzeuggeschwindigkeiten berechnet. Alternativ oder ergänzend kann eine Information über eine Position eines Fahrzeuges innerhalb einer Kolonne auch über mindestens einen optischen Sensor, insbesondere eine Kamera und/oder einen Lidar-Sensor und/oder einen Ultraschallsensor ermittelt werden. Je nach Fahrtgeschwindigkeit und Position und/oder Anordnung des Fahrzeuges innerhalb der Fahrzeugkolonne variiert der Luftwiderstand und/oder der luftanströmungsbedingte Auftrieb. Diese Variation kann vorzugsweise durch die Einstellung des Anstellwinkels des Spoilerelements situationsoptimiert kompensiert werden. Die Auswahl des Anstellwinkels hängt dabei vorzugsweise davon ab, um wie viele Prozent der Luftwiderstand und/oder der Auftrieb des betreffenden Fahrzeuges erhöht oder verringert werden soll.

In einer bevorzugten Ausführungsform ist die Auswerte- und Steuereinrichtung ferner dazu ausgebildet, mindestens eine Fahrzeuggeschwindigkeit und/oder eine Witterungsbedingung und/oder eine Straßenbedingung zu ermitteln und einen Anstellwinkel des mindestens einen Spoilerelements auch basierend auf der ermittelten Fahrzeuggeschwindigkeit und/oder der ermittelten Witterungsbedingung und/oder der ermittelten Straßenbedingung einzustellen. Besonders bevorzugt umfasst das Spoilersystem hierzu mindestens einen Messsensor, insbesondere einen Gyrosensor und/oder einen Regensensor und/oder einen Ultraschallsensor und/oder einen Temperatursensor und/oder einen Niederschlagssensor und/oder einen Geschwindigkeitssensor und/oder einen kapazitiven und/oder induktiven Sensor. Der Messsensor ist vorzugsweise dazu eingerichtet, Messdaten zu erfassen und diese an die Auswerte- und Steuereinrichtung zu übermitteln. Auf Basis dieser Messdaten kann die Auswerte- und Steuereinrichtung vorzugsweise die Fahrzeuggeschwindigkeit und/oder die Witterungsbedingung und/oder die Straßenbedingung ermitteln. Vorzugsweise können GPS-Koordinaten von dem Fahrzeug erfasst und bei der Ermittlung der jeweiligen Witterungsbedingung und/oder der jeweiligen Straßenbedingung miteinbezogen werden. Alternativ oder ergänzend ist die Auswerte- und Steuereinrichtung dazu eingerichtet, auf Basis von GPS-Bewegungs- und/oder Positionskoordinaten des Fahrzeuges die Fahrzeuggeschwindigkeit zu ermitteln und/oder Informationen über Witterungs- und/oder Straßenbedingungen insbesondere aus dem Internet zu ermitteln. Grundsätzlich kann die Auswerte- und Steuereinrichtung dazu eingerichtet sein, drahtlos mit einer Wettermeldestation in einer Umgebung des Fahrzeuges zu kommunizieren, um derart Informationen über Witterungsbedingung zu erhalten. Alternativ oder ergänzend ist die Auswerte-und Steuereinrichtung dazu eingerichtet, mit vorausfahrenden Fahrzeugen zu kommunizieren, um derart von diesen Fahrzeugen Informationen über Witterungs- und/oder Straßenbedingungen zu erhalten. Die Einstellung des Anstellwinkels kann unter Einbeziehung dieser weiteren Informationen erfolgen. Besonders bevorzugt kann eine Gewichtung und/oder Abwägung zwischen den jeweiligen Informationen vorbestimmt sein.

In einer bevorzugten Ausführungsform ist die Auswerte- und Steuereinrichtung dazu ausgebildet, das Ermitteln einer vorbestimmten Fahrzeuggeschwindigkeit und/oder einer vorbestimmten Witterungsbedingung und/oder einer vorbestimmten Straßenbedingung als ein Auslöseereignis zu erfassen und einen Anstellwinkel des mindestens einen Spoilerelements in Antwort auf das Auslöseereignis derart zu verstellen, dass ein durch das mindestens eine Spoilerelement erzeugbarer Abtrieb basierend auf den vorbestimmten CFD-Simulationsdaten maximiert ist. Gemäß dieser Ausführungsform wird also ein Trigger-Ereignis dazu verwendet, das mindestens eine Spoilerelement in eine Stellung, d. h. in einen vorbestimmten Anstellwinkel, zu verbringen, bei dem durch das Spoilerelement ein maximaler Abtrieb für das Fahrzeug erzeugt wird. Dadurch kann erzielt werden, dass ein Abtrieb des Fahrzeuges beispielsweise auch bei einer Straßenbedingung wie einer nassen und/oder schneebedeckten und/oder eisbedeckten und/oder laubbedeckten und/oder sandbedeckten Fahrbahn und/oder bei einer Witterungsbedingung wie Regen und/oder Schneefall und/oder Hagel bezogen auf das eingesetzte Spoilerelement maximiert ist. Alternativ oder ergänzend kann das Spoilerelement ab einer vorbestimmten Grenzgeschwindigkeit in diese Stellung des maximalen Abtriebes verstellt werden.

Erfindungsgemäß ist es somit möglich, mindestens ein vorbestimmtes Trigger-Ereignis als Ausschlusskriterium für eine luftwiderstandsoptimierte Einstellung eines Anstellwinkels des Spoilerelements anzuwenden, um bei Auftreten dieses Trigger-Ereignisses einen Abtrieb des Fahrzeuges insbesondere unabhängig von anderen Umgebungskonditionen zu maximieren. Wenn das Fahrzeug beispielsweise eine bestimmte Geschwindigkeit erreicht, reagiert die Auswerte- und Steuereinrichtung damit, das Spoilerelement in eine vorbestimmte Anstellwinkelposition zu verstellen, bei der der erzeugte Abtrieb maximiert ist. Eine Verringerung des Luftwiderstands des Fahrzeuges, die energieeinsparend wirkt, ist aufgrund sicherheitsrelevanter Kriterien in diesem Fall vorzugswese nicht das Hauptanliegen. Alternativ oder ergänzend können auch Informationen eines Traktionssensors und/oder Informationen über sonstige Fahrbahnbedingungen, beispielsweise über einen Fahrbahnbelag und/oder über eine Regenableiteigenschaft der Fahrbahn an die Auswerte- und Steuereinrichtung zur Einstellung des einen maximalen Abtrieb bewirkenden Anstellwinkels übermittelt werden. Wenn eine Fahrbahn beispielsweise aufgrund von Regen und/oder aus anderen Gründen nass ist, ist die Auswerte- und Steuereinrichtung vorzugsweise dazu eingerichtet, das mindestens eine Spoilerelement in die vorbestimmte Anstellwinkelposition zu verstellen, bei der ein maximaler Abtrieb generiert wird, um derart beispielsweise den Anpressdruck auf das Fahrzeug zu erhöhen. Der vorbestimmte Anstellwinkel, bei dem ein maximaler Abtrieb erzielt wird, resultiert vorzugsweise aus mindestens einer vorangegangenen CFD-Simulation des mindestens einen Spoilerelements.

In einer bevorzugten Ausführungsform ist der Lidar-Sensor dazu eingerichtet, elektromagnetische Strahlung einer vorbestimmten Wellenlänge und/oder eines vorbestimmten Wellenlängenbereiches in ein Fahrzeugumfeld zu senden und/oder die elektromagnetische Strahlung aus dem Fahrzeugumfeld zu empfangen und ein Rückantwortsignal eines elektromagnetischen Strahlungsanteils der elektromagnetischen Strahlung, die von mindestens einem Aerosolpartikel in dem Fahrzeugumfeld reflektiert wird, auszuwerten, um derart die Windgeschwindigkeit und/oder die Windrichtung und/oder die Windböe und/oder das Windverteilungsprofil zu ermitteln. Für die Messung der Windgeschwindigkeit und/oder der Windrichtung und/oder der Windverteilung und/oder der Windböenverteilung wird erfindungsgemäß ein Lidar-Sensor verwendet. Die von dem Lidar-Sensor versendeten elektromagnetischen Strahlen treffen vorzugsweise in der Luft auf Aerosolpartikel. An diesen Partikeln werden die elektromagnetischen Strahlen reflektiert und können vom Lidar-Sensor wieder empfangen werden. Durch Signalauswertung kann vorzugsweise zumindest eine Aerosolpartikelrichtung parallel zu einer Hauptsenderichtung des Lidar-Sensors, insbesondere parallel zu einer optischen Achse des Lidar-Sensors ermittelt werden. In anderen Fällen kann auch eine dreidimensionale Bewegung des mindestens einen Aerosolpartikels in der Luft bestimmt werden. Durch die Bewegung des mindestens einen Aerosolpartikels in der Luft kann vorzugsweise eine Windgeschwindigkeit und/oder eine Windrichtung in der Fahrzeugumgebung, insbesondere in Fahrtrichtung vor dem Fahrzeug ermittelt werden. Wird eine Vielzahl von Aerosolpartikeln auf diese Weise detektiert, kann daraus ein Windverteilungsprofil und/oder ein Winddichteprofil und/oder eine Windböe in der Fahrzeugumgebung erfasst werden. Bei der Erfassung einer Windböe wird vorzugsweise eine Durchschnitts- und/oder eine Spitzengeschwindigkeit und/oder eine Hauptbewegungsrichtung einer Aerosolpartikelwolke, die in einem vorbestimmten Abstand vor dem Fahrzeug erfasst wird, ermittelt. Diese vorherige Information über die Windgeschwindigkeit und/oder die Windrichtung und/oder die Winddichte und/oder das Windprofil und/oder die Windböe werden vorzugsweise an die Auswerte- und Steuereinrichtung übermittelt. Auf Basis dieser Informationen kann dann ein Anstellwinkel des mindestens einen Spoilerelements berechnet und eingestellt werden. Derart kann den Auswirkungen des Windes auf das Fahrzeug entgegengewirkt werden. Besonders bevorzugt wird ein Zeitpunkt der Einstellung des Anstellwinkels auf Grundlage einer Entfernung einer ermittelten Windböe zum Zeitpunkt der Messung der Windböe unter Einbeziehung einer Fahrzeuggeschwindigkeit und/oder einer Fahrzeugbeschleunigung und/oder einer GPS-Position des Fahrzeuges berechnet. Besonders bevorzugt ist die Auswerte- und Steuereinrichtung dazu eingerichtet, die situationsbedingten Berechnungen des Anstellwinkels und/oder die Einstellung des Anstellwinkels nach dessen Berechnung in Echtzeit oder zumindest in Quasi-Echtzeit, insbesondere unter Berücksichtigung einer rechenleistungsbedingten Karenzzeit, durchzuführen. Es ist hierdurch möglich, die Auswirkungen einer Veränderung in der Fahrzeugumgebung, insbesondere unter Betrachtung einer Fahrzeugposition innerhalb einer Fahrzeugkolonne und/oder unter Betrachtung einer Windsituation vor dem sich bewegenden Fahrzeug, durch die situationsoptimierte Einstellung des Anstellwinkels auszugleichen.

In einer bevorzugten Ausführungsform ist der Lidar-Sensor dazu eingerichtet, eine Windgeschwindigkeit und/oder eine Windrichtung und/oder eine Windböe und/oder ein Windverteilungsprofil in einer vorbestimmten Distanz zu dem vorzugweise sich bewegenden und/oder beschleunigenden und/oder entschleunigenden Kraftfahrzeug zu ermitteln. Der Lidar-Sensor und/oder die Auswerte- und Steuereinrichtung ist/sind vorzugsweise dazu eingerichtet, die vorbestimmte Distanz in Abhängigkeit von einer Fahrzeuggeschwindigkeit und/oder einer Fahrzeugbeschleunigung und/oder einer Fahrzeugentschleunigung (Abbremsung) und/oder einer Windgeschwindigkeit zu variieren. Besonders bevorzugt ist der Lidar-Sensor in einem Frontbereich des Fahrzeuges, beispielsweise im Bereich eines Kühlergrills und/oder einer Frontstoßstange und/oder in einem frontseitigen Dachbereich angeordnet. Der Lidar-Sensor ist vorzugsweise dazu eingerichtet, die Fahrzeugumgebung zumindest in einem Sichtfeld um eine optische Achse des Lidar-Sensors zu erfassen. Die optische Achse ist vorzugsweise parallel zu einer Fahrzeuglängsrichtung, insbesondere zu einer Hauptbewegungsrichtung des Fahrzeugs ausgerichtet. Derart kann die Windgeschwindigkeit und/oder die Windrichtung zumindest parallel zu der Hauptbewegungsrichtung des Fahrzeuges ermittelt werden. Es ist jedoch auch möglich, die Windgeschwindigkeit und/oder die Windrichtung dreidimensional zu erfassen. Derart kann insbesondere auch eine sich vor dem Fahrzeug anbahnende Windböe und/oder ein Windverteilungsprofil und/oder ein Winddichteprofil vor dem Fahrzeug ermittelt werden. Bevorzugt kann der mindestens eine Lidar-Sensor auch mindesten einen Seitenbereich um das Fahrzeug herum abscannen.

In einer alternativen oder ergänzenden Ausführungsform ist es möglich, dass die Auswerte- und Steuereinrichtung dazu eingerichtet ist, eine Kontrollzeit und/oder Einstellzeit und/oder Ansteuerzeit und/oder Antriebsgeschwindigkeit eines Antriebes, durch den das mindestens eine Spoilerelement eingestellt wird, in Abhängigkeit von einer Fahrzeuggeschwindigkeit und/oder einer Fahrzeugbeschleunigung und/oder einer Fahrzeugentschleunigung (Abbremsung) und/oder einer Windgeschwindigkeit variiert. Beispielsweise ist es vorteilhaft, wenn bei einer hohen Fahrzeuggeschwindigkeit und/oder Fahrzeugbeschleunigung und/oder einer hohen Windgeschwindigkeit, die Kontrollzeit und/oder Einstellzeit und/oder Ansteuerzeit verringert und/oder Antriebsgeschwindigkeit erhöht wird. Hingegen kann die Kontrollzeit und/oder Einstellzeit und/oder Ansteuerzeit bei einer geringeren Fahrzeuggeschwindigkeit und/oder einer Fahrzeugentschleunigung (Abbremsung) und/oder einer Windgeschwindigkeit entsprechend erhöht und/oder die Antriebsgeschwindigkeit verringert werden.

In einer bevorzugten Ausführungsform umfasst das Spoilersystem mindestens einen Umfeldsensor, insbesondere einen Ultraschallsensor und/oder eine Kamera und/oder einen Lidar-Sensor, der dazu eingerichtet ist, die Position und/oder Anordnung des Kraftfahrzeuges innerhalb der Fahrzeugkolonne als Bilddaten zu erfassen, wobei die Auswerte- und Steuereinrichtung dazu eingerichtet ist, aus den erfassten Bilddaten die Position und/oder Anordnung des Kraftfahrzeuges innerhalb der Fahrzeugkolonne zu ermitteln. Alternativ ist die Auswerte- und Steuereinrichtung dazu eingerichtet, mit mindestens einem weiteren Fahrzeug in der Fahrzeugkolonne zu kommunizieren, um derart die Position und/oder Anordnung des Kraftfahrzeuges innerhalb der Fahrzeugkolonne zu ermitteln. Grundsätzlich kann auch der zur Windmessung eingesetzte Lidar-Sensor für die Ermittlung der Fahrzeugposition innerhalb einer Fahrzeugkolonne genutzt werden. Derart kann eine technische Funktionskopplung der beiden erfindungsgemäßen Spoilersysteme erreicht werden und der zum Einsatz kommende Lidar-Sensor in synergetischer Weise verwendet werden.

In einer bevorzugten Ausführungsform ist aus den vorbestimmten CFD-Simulationsdaten eine insbesondere spoilerelementspezifische, bevorzugt mathematisch vereinfachte Anstellwinkelsteuerfunktion, besonders bevorzugt umfassend mindestens ein Polynomfunktionsglied höherer Ordnung und/oder ein Taylor-Funktionselement und/oder ein Laplace-Funktionselement und/oder ein Fourier-Funktionselement und/oder ein Newton-Funktionselement, ermittelbar. Die Auswerte- und Steuereinrichtung ist dazu ausgebildet, den Anstellwinkel durch Anwendung der Anstellwinkelsteuerfunktion einzustellen. Mit anderen Worten wird vorzugsweise vor der Verwendung des Spoilersystems auf Basis der erzeugten CFD-Simulationsdaten ein vereinfachtes Berechnungsmodell für die Berechnung des Anstellwinkels des Spoilerelements in Abhängigkeit von einem gemessenen Windparameter und/oder in Abhängigkeit von einer Position und/oder einer Anordnung des betreffenden Fahrzeuges innerhalb einer Fahrzeugkolonne als die Anstellwinkelsteuerfunktion ermittelt. Hierbei können Verfahren der mathematischen Korrelation und/oder Regression und/oder andere Verfahren zur Vereinfachung komplexer Funktionszusammenhänge zur Anwendung kommen. Die aus den CFD-Daten ermittelte Anstellwinkelsteuerfunktion wird vorzugsweise der Auswerte- und Steuereinrichtung zur Verfügung gestellt, die dazu eingerichtet ist, durch Funktionsanwendung der Anstellwinkelsteuerfunktion auf Basis der ermittelten Funktionsparameter einen Anstellwinkel des mindestens einen Spoilerelements zu berechnen. Aus dem berechneten Anstellwinkel wird vorzugsweise ein Steuerbefehl erzeugt, auf dessen Basis die Einstellung des Anstellwinkels des mindestens einen Spoilerelements erfolgt.

In einer bevorzugten Ausführungsform umfasst die Anstellwinkelsteuerfunktion mindestens eine Abhängigkeit des Anstellwinkels von einer Windgeschwindigkeit und/oder einer Windrichtung und/oder einer Winddichte und/oder einem Windverteilungsprofil und/oder einer Luftverwirbelung, insbesondere verursacht durch ein vorausfahrendes Fahrzeug und/oder von einer Position und/oder einer Anordnung des Fahrzeuges innerhalb einer Fahrzeugkolonne. Grundsätzlich kann die Anstellwinkelsteuerfunktion auch weitere oder alternative Parameter umfassen. Während der Verwendung des Spoilersystems werden die Funktionsparameter vorzugsweise als Sensordaten und/oder als übermittelte Informationsdaten der Auswerte- und Steuereinrichtung zur Verfügung gestellt und in die Anstellwinkelsteuerfunktion eingespeist. Im Ergebnis wird je nach Eingangsparametersatz ein situationsoptimierter Anstellwinkel erhalten. Die Anstellwinkelsteuerfunktion ist vorzugsweise deterministisch und/oder stetig. Dadurch kann eine Berechnung in Echtzeit oder Quasi-Echtzeit bereitgestellt werden.

In einer bevorzugten Ausführungsform ist das mindestens eine Spoilerelement in einem Heckspoiler und/oder in einem Frontspoiler und/oder in einem Radspoiler und/oder in einem Seitenspoiler und/oder in einer Einrichtung zur Motorluftzufuhr umfasst. Grundsätzlich kann das Spoilerelement Teil einer Lüftungszufuhr und/oder eines Strömungsdurchlasses sein. Das erfindungsgemäße Prinzip lässt sich grundsätzlich bei sämtlichen Bauteilelementen einsetzen, die in ihrem bestimmungsgemäßen Gebrauch von einer Luftströmung angeströmt und/oder umströmt sind und sich vorzugsweise gegenüber einem umgebenden Bauteil relativ verstellen lassen.

Das Spoilersystem nach der Erfindung kann grundsätzlich an einer beliebigen Stelle eines Kraftfahrzeugs angeordnet sein und für unterschiedliche Zwecke ausgelegt sein. Auch können mehrere Spoilersysteme an einem Kraftfahrzeug angeordnet sein. Bei dem Kraftfahrzeug kann es sich vorzugsweise um einen Personenkraftwagen, einen Lastkraftwagen, ein Transportfahrzeug, ein Schienenfahrzeug, ein autonom oder teilautonom fahrendes Fahrzeug, ein Personentransportfahrzeug, ein Truppenfahrzeug, ein Elektrofahrzeug und/oder ein Hybrid-Fahrzeug und/oder Hybrid-Elektrische-Fahrzeuge und/oder Motorräder oder Ähnliches handeln. Insbesondere ist der Einsatz des erfindungsgemäßen Spoilersystems für Elektrofahrzeug und/oder Hybrid-Fahrzeuge.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf sämtliche Ausführungen der Erfindung beziehen, ohne jeweils separat genannt zu werden.

Ausführungsformen der Erfindung sind in den Zeichnungen schematisiert dargestellt und werden nachfolgend beispielhaft erläutert. Es zeigen:
- Figur 1: eine schematische Ansicht eines Spoilersystems gemäß einem ersten Aspekt;
- Figur 2: eine schematische Ansicht eines Spoilersystems gemäß einem zweiten Aspekt
- Figur 3: eine schematische Ansicht eines Flussdiagramms;
- Figur 4: eine schematische Darstellung einer Berechnungsschleife;
- Figur 5: eine schematische Diagramm-Darstellung einer ermittelten Windböe vor einem Fahrzeug; und
- Figur 6: eine schematische Darstellung einer Anstellwinkelsteuerfunktion.

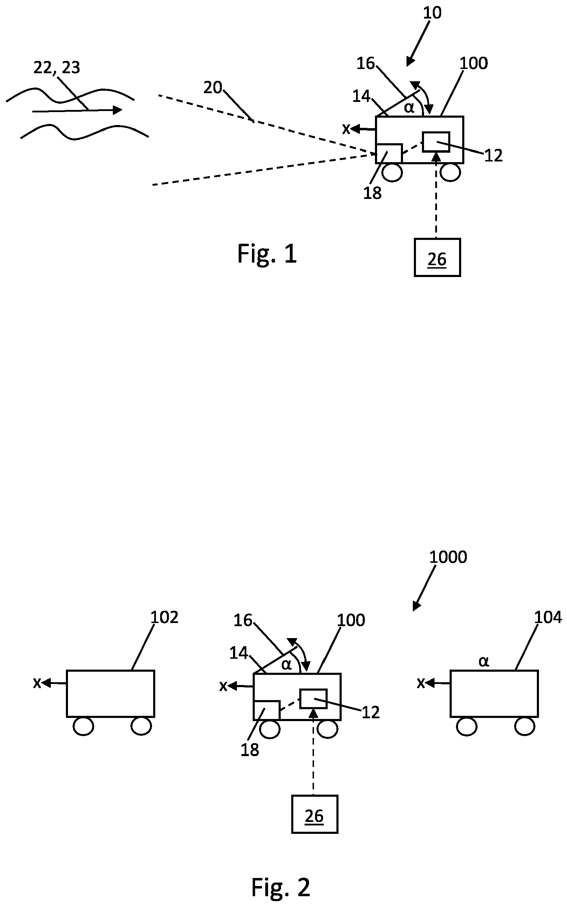

In Figur 1 ist ein erfindungsgemäßes Spoilersystem 10 gemäß einem ersten Aspekt gezeigt. Das Spoilersystem 10 ist in einem Kraftfahrzeug bzw. Fahrzeug 100 umfasst. Das Spoilersystem 10 umfasst eine Auswerte- und Steuereinrichtung 12, ein Fahrzeugbauteil 14, mindestens ein Spoilerelement 16, das verstellbar an dem Fahrzeugbauteil 14 angeordnet ist, und mindestens einen Lidar-Sensor 18. Sämtliche Komponenten sind in Figur 1 nur schematisch angezeigt.

Die Auswerte- und Steuereinrichtung 12 kann an einer beliebigen Stelle innerhalb des Fahrzeuges 100 angeordnet sein. Die Auswerte- und Steuereinrichtung 12 kann grundsätzlich auch außerhalb des Fahrzeuges 100, beispielsweise auf einem Server eines Fahrzeuganbieters angeordnet sein und mit dem Fahrzeug 100 fernkommunikativ gekoppelt sein.

Das Fahrzeugbauteil 14 ist beispielhaft eine Dachhaut des Fahrzeuges 100. Alternativ kann es sich bei dem Fahrzeugbauteil 14 um ein anderes Karosserieteil, insbesondere um ein Flächenbauteil der Karosserie, beispielsweise um einen Teil einer Außenhaut des Fahrzeuges 100 handeln. Alternativ kann es sich bei dem Fahrzeugbauteil 14 auch um ein sonstiges Bauteil handeln, das während einer Fahrt mit dem Fahrzeug 100 einer äußeren Luftströmung und/oder Umströmung ausgesetzt ist.

Das Spoilerelement 16 ist vorzugsweise zumindest um eine Bewegungsachse drehbar an dem Fahrzeugbauteil 14 angeordnet. Bevorzugt ist das Spoilerelement 16 in einer Öffnung des Fahrzeugbauteils 14 verstellbar angeordnet.

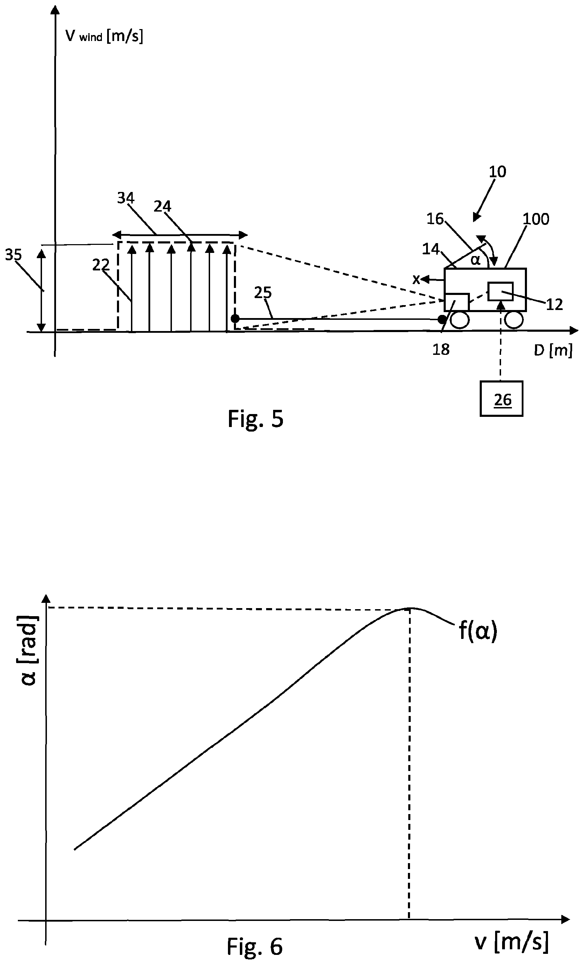

Der Lidar-Sensor 18 ist vorzugsweise in einem Frontbereich des Fahrzeuges 100, vorliegend beispielsweise im Bereich einer Frontstoßstange angeordnet und dazu eingerichtet, elektromagnetische Strahlung in ein Fahrzeugumfeld innerhalb eines Sichtfeldes 20 zu senden und diese aus dem Fahrzeugumfeld zumindest als reflektierte Strahlung wieder zu empfangen. Derart kann der Lidar-Sensor 18 das Fahrzeugumfeld erfassen. Der Lidar-Sensor 18 ist dazu eingerichtet, eine Windgeschwindigkeit 22 und/oder eine Windrichtung 23 in einem Fahrzeugumfeld zu ermitteln. Die Windgeschwindigkeit 22 kann vorzugsweise aus einem Betrag des schematisch angezeigten Vektors ermittelt werden. Die Windrichtung 23 ergibt sich vorzugsweise aus der Richtung des Vektors. Die Windrichtung 23 ist in Figur 1 beispielhaft entgegengesetzt zu einer Fahrzeuglängsrichtung x angezeigt. Der Lidar-Sensor 18 kann auch mindestens eine Windböe und/oder eine Windverteilung und/oder eine Winddichte 24 in einem Bereich vor dem Fahrzeug 100 ermitteln, siehe schematische Diagramm-Figur 5. Vorzugsweise ermittelt der Lidar-Sensor 18 die Windgeschwindigkeit 22 und/oder die Windrichtung 23 und/oder die Winddichte 24 und/oder die Windböe in einem vorbestimmten Abstand 25 zu dem sich bewegenden Fahrzeug 100. Der Abstand 25 kann je nach Fahrzeuggeschwindigkeit und/oder Beschleunigung verändert werden, so dass vorzugsweise stets eine Karenzzeit verbleibt, um das mindestens eine Spoilerelement 16 auf erfindungsgemäße Weise einzustellen.

Die Auswerte- und Steuereinrichtung 12 ist dazu eingerichtet, zumindest in Abhängigkeit von der ermittelten Windgeschwindigkeit 22 und/oder der ermittelten Windböe und/oder der ermittelten Windrichtung 23 und/oder dem ermittelten Windverteilungsprofil und/oder der ermittelten Winddichte einen Anstellwinkel α des mindestens einen Spoilerelements 16 relativ zu dem Fahrzeugbauteil 14 basierend auf vorbestimmten CFD-Simulationsdaten eines CFD-Simulationsmodells 26 des mindestens einen Spoilerelements 16 einzustellen. Diese Einstellbarkeit ist schematisch mit einem Doppelpfeil angedeutet. Die CFD-Simulationsdaten werden der Auswerte- und Steuereinrichtung 12 vorzugsweise in Form einer Anstellwinkelfunktion f(α) zur Verfügung gestellt.

In Figur 2 ist das Spoilersystem 10 gemäß einem zweiten Aspekt der Erfindung gezeigt. Das Spoilersystem 10 umfasst im zweiten Aspekt die Auswerte- und Steuereinrichtung 12, das Fahrzeugbauteil 14 und das mindestens eine Spoilerelement 16, das verstellbar an dem Fahrzeugbauteil 14 angeordnet ist. Die Auswerte- und Steuereinrichtung 12 ist dazu eingerichtet, eine Position und/oder eine Anordnung des Kraftfahrzeuges 100 innerhalb einer Fahrzeugkolonne 1000, die mehrere Fahrzeuge 100, 102, 104 umfasst, zu ermitteln und zumindest in Abhängigkeit von der ermittelten Position und/oder Anordnung einen Anstellwinkel α des mindestens einen Spoilerelements 16 relativ zu dem Fahrzeugbauteil 14 basierend auf vorbestimmten CFD-Simulationsdaten des mindestens einen Spoilerelements 16 einzustellen.

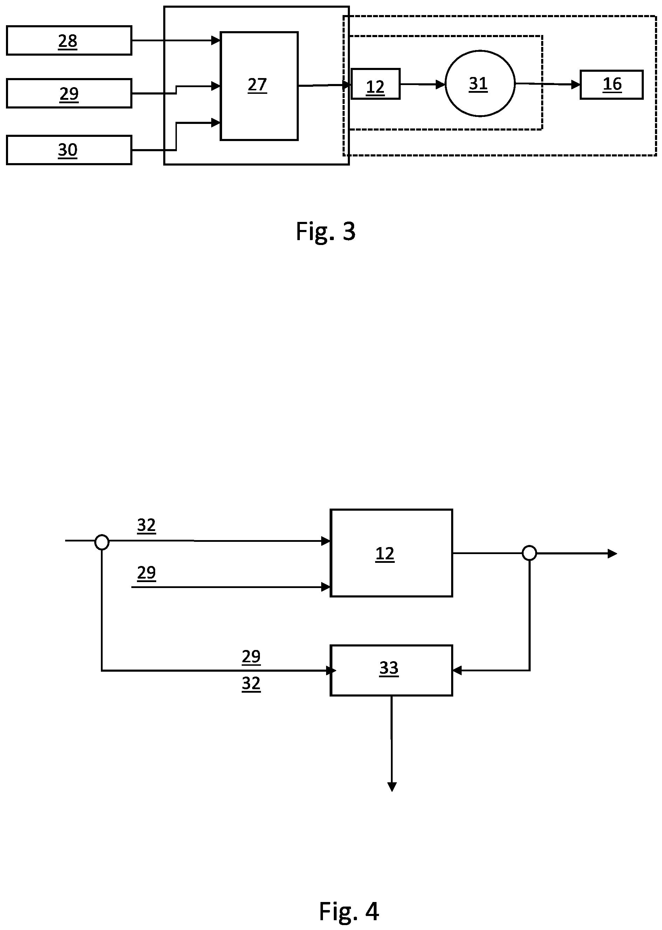

In Figur 3 ist eine schematische Ansicht einer Auswerte- und Steuereinrichtung 12 gezeigt. Der Auswerte- und Steuereinrichtung 12 ist ein BUS-Eingangssystem 27 vorgeschaltet. Über das BUS-Eingangssystem 27 werden der Auswerte- und Steuereinrichtung 12 beispielhaft Messwerte eines Fahrzeuggeschwindigkeitssensors 28, Messwerte 29 eines Windsensors, vorliegend des Lidar-Sensors 18, und Messwerte 30 eines Traktionssensors zur Verfügung gestellt. Über die Ansteuerung eines Antriebes 31, der mit dem mindestens einen Spoilerelement 16 bewegungsübertragend gekoppelt ist, kann ein Anstellwinkel α des Spoilerelements 16 einstellt werden. Bei dem Antrieb 31 handelt es sich vorzugsweise um einen Elektromotor.

In Figur 4 ist eine Rückkopplungsschleife angezeigt, die insbesondere in einer Recheneinheit der Auswerte- und Steuereinrichtung 12 implementiert sein kann. Die Auswerte-und Steuereinrichtung 12 erhält als Eingangsgrößen die Messwerte 29 des Windsensors sowie einen Messwert 32 über den momentan eingestellten Anstellwinkel α. Der Messwert 32 über den Anstellwinkel α kann vorzugsweise mittels eines Winkelmesssensors (nicht gezeigt) erfasst werden. Die Ergebnisse können durch die Auswerte- und Steuereinrichtung 12 an einen externen Beobachter 33, insbesondere an einen Server oder Ähnliches übertragen werden, an den vorzugsweise auch die Eingangsgrößen der Auswerte- und Steuereinrichtung 12 übermittelt werden. Durch den externen Beobachter 33 kann eine Einstellung des Anstellwinkels α über die Betriebszeit des Spoilersystems 10 optimiert werden.

In Figur 5 ist ein schematisches Diagramm dargestellt, bei dem die Windgeschwindigkeit V über einer Distanz D (Reisedistanz) aufgetragen ist. Durch den Lidar-Sensor 18 wird im Abstand 25 zu dem Fahrzeug 100 ein Winddichteprofil 24 bzw. ein Windverteilungsprofil ermittelt. Ab dem Abstand D gibt es also einen Windzone, die sich über eine Ausbreitungsdistanz 34 erstreckt. Innerhalb der Ausbreitungsdistanz 34 wird von dem Lidar-Sensor 18 eine vorbestimmte Windgeschwindigkeit 35 gemessen. Nach der Ausbreitungsdistanz 34 wird kein Wind mehr gemessen.

In Figur 6 ist beispielhaft eine Anstellwinkelfunktion f(α) in einem Diagramm dargestellt, bei dem ein Anstellwinkel α in rad über einer Windgeschwindigkeit v in m/s abgebildet ist. Die Anstellwinkelfunktion f(α) ist lediglich beispielhaft.

### Bezugszeichenliste

- 10: Spoilersystem
- 12: Auswerte- und Steuereinrichtung
- 14: Fahrzeugbauteil
- 16: Spoilerelement
- 18: Lidar-Sensor
- 20: Sichtfeld
- 22: Windgeschwindigkeit
- 23: Windrichtung
- 24: Winddichte bzw. Windverteilungsprofil
- 25: Abstand
- 26: CFD-Simulationsmodell
- 27: BUS-Eingangssystem
- 28: Messwerte eines Fahrzeuggeschwindigkeitssensors
- 29: Messwerte eines Windsensors
- 30: Messwerte eines Traktionssensors
- 31: Antrieb
- 32: Messwert über momentanen Anstellwinkel
- 33: externer Beobachter
- 34: Ausbreitungsdistanz
- 35: vorbestimmte Windgeschwindigkeit
- 100: Kraftfahrzeug bzw. Fahrzeug
- 102: weiteres Kraftfahrzeug
- 104: weiteres Kraftfahrzeug
- 1000: Fahrzeugkolonne

## Patentansprüche

1. Spoilersystem für ein Kraftfahrzeug, umfassend eine Auswerte- und Steuereinrichtung (12), ein Fahrzeugbauteil (14), mindestens ein Spoilerelement (16), das verstellbar an dem Fahrzeugbauteil (14) angeordnet ist, und mindestens einen Lidar-Sensor (18), der dazu eingerichtet ist, eine Windgeschwindigkeit (22) und/oder eine Windrichtung (23) und/oder eine Windböe und/oder ein Windverteilungsprofil (24) eines Fahrzeugumfelds zu ermitteln, wobei die Auswerte- und Steuereinrichtung (12) dazu eingerichtet ist, zumindest in Abhängigkeit von der ermittelten Windgeschwindigkeit (22) und/oder der ermittelten Windböe und/oder der ermittelten Windrichtung (23) und/oder dem ermittelten Windverteilungsprofil (24) einen Anstellwinkel α des mindestens einen Spoilerelements (16) relativ zu dem Fahrzeugbauteil (14) basierend auf vorbestimmten CFD-Simulationsdaten des mindestens einen Spoilerelements (16) einzustellen.

2. Spoilersystem für ein Kraftfahrzeug, umfassend eine Auswerte- und Steuereinrichtung (12), ein Fahrzeugbauteil (14) und mindestens ein Spoilerelement (16), das verstellbar an dem Fahrzeugbauteil (14) angeordnet ist, wobei die Auswerte- und Steuereinrichtung (12) dazu eingerichtet ist, eine Position und/oder eine Anordnung des Kraftfahrzeuges (100) innerhalb einer Fahrzeugkolonne (1000), die mehrere Fahrzeuge umfasst, zu ermitteln und zumindest in Abhängigkeit von der ermittelten Position und/oder Anordnung einen Anstellwinkel α des mindestens einen Spoilerelements (16) relativ zu dem Fahrzeugbauteil (14) basierend auf vorbestimmten CFD-Simulationsdaten des mindestens einen Spoilerelements (16) einzustellen.

3. Spoilersystem nach Anspruch 1 oder 2, **dadurch gekennzeichnet, dass** die vorbestimmten CFD-Simulationsdaten zu einer Vielzahl von simulierten Anstellwinkeln α jeweils mindestens eine aerodynamische Kenngröße, insbesondere einen Luftwiderstandsbeiwert und/oder einen Luftreibungsbeiwert und/oder einen aerodynamischen Wirkungsgrad des mindestens einen Spoilerelements (16) bei unterschiedlichen Fahrzeuggeschwindigkeiten und/oder Windgeschwindigkeiten und/oder Windrichtungen und/oder Windverteilungsprofilen, umfassen.

4. Spoilersystem nach einem der vorstehenden Ansprüche, **dadurch gekennzeichnet, dass** die Auswerte- und Steuereinrichtung (12) ferner dazu ausgebildet ist, mindestens eine Fahrzeuggeschwindigkeit und/oder eine Witterungsbedingung und/oder eine Straßenbedingung zu ermitteln und einen Anstellwinkel α des mindestens einen Spoilerelements (16) auch basierend auf der ermittelten Fahrzeuggeschwindigkeit und/oder der ermittelten Witterungsbedingung und/oder der ermittelten Straßenbedingung einzustellen.

5. Spoilersystem nach Anspruch 4, **dadurch gekennzeichnet, dass** die Auswerte- und Steuereinrichtung (12) dazu ausgebildet ist, das Ermitteln einer vorbestimmten Fahrzeuggeschwindigkeit und/oder einer vorbestimmten Witterungsbedingung und/oder einer vorbestimmten Straßenbedingung als ein Auslöseereignis zu erfassen und einen Anstellwinkel α des mindestens einen Spoilerelements (16) in Antwort auf das Auslöseereignis derart zu verstellen, dass ein durch das mindestens eine Spoilerelement (16) erzeugbarer Abtrieb basierend auf den vorbestimmten CFD-Simulationsdaten maximiert ist.

6. Spoilersystem nach Anspruch 1 oder einem der Ansprüche 3 bis 5, jeweils rückbezogen auf Anspruch 1, **dadurch gekennzeichnet, dass** der Lidar-Sensor (18) dazu eingerichtet ist, elektromagnetische Strahlung einer vorbestimmten Wellenlänge und/oder eines vorbestimmten Wellenlängenbereiches in ein Fahrzeugumfeld zu senden und/oder die elektromagnetische Strahlung aus dem Fahrzeugumfeld zu empfangen; und ein Rückantwortsignal eines elektromagnetischen Strahlungsanteils der elektromagnetischen Strahlung, die von mindestens einem Aerosolpartikel in dem Fahrzeugumfeld reflektiert wird, auszuwerten, um derart die Windgeschwindigkeit (22) und/oder die Windrichtung (23) und/oder die Windböe und/oder das Windverteilungsprofil (24) zu ermitteln.

7. Spoilersystem nach Anspruch 1 oder einem der Ansprüche 3 bis 6, jeweils rückbezogen auf Anspruch 1, **dadurch gekennzeichnet, dass** der Lidar-Sensor (18) dazu eingerichtet ist, eine Windgeschwindigkeit (22) und/oder eine Windrichtung (23) und/oder eine Windböe und/oder ein Windverteilungsprofil (24) in einer vorbestimmten Distanz zu dem vorzugweise bewegten Kraftfahrzeug zu ermitteln, wobei der Lidar-Sensor (18) und/oder die Auswerte- und Steuereinrichtung (12) vorzugsweise dazu eingerichtet ist/sind, die vorbestimmte Distanz in Abhängigkeit von einer Fahrzeuggeschwindigkeit und/oder einer Fahrzeugbeschleunigung und/oder einer Windgeschwindigkeit zu variieren.

8. Spoilersystem nach einem der Ansprüche 2 bis 5, **dadurch gekennzeichnet, dass** das Spoilersystem (10) ferner mindestens einen Umfeldsensor, insbesondere einen Ultraschallsensor und/oder eine Kamera und/oder einen Lidar-Sensor, umfasst, der dazu eingerichtet ist, die Position und/oder Anordnung des Kraftfahrzeuges (100) innerhalb der Fahrzeugkolonne (1000) als Bilddaten zu erfassen, wobei die Auswerte- und Steuereinrichtung (12) dazu eingerichtet ist, aus den erfassten Bilddaten die Position und/oder Anordnung des Kraftfahrzeuges (100) innerhalb der Fahrzeugkolonne (1000) zu ermitteln, oder dass die Auswerte- und Steuereinrichtung (12) dazu eingerichtet ist, mit mindestens einem weiteren Fahrzeug in der Fahrzeugkolonne (1000) zu kommunizieren, um derart die Position und/oder Anordnung des Kraftfahrzeuges innerhalb der Fahrzeugkolonne (1000) zu ermitteln.

9. Spoilersystem nach einem der vorherigen Ansprüche, **dadurch gekennzeichnet, dass** aus den vorbestimmten CFD-Simulationsdaten eine insbesondere spoilerelementspezifische, bevorzugt mathematisch vereinfachte Anstellwinkelsteuerfunktion f(α), bevorzugt umfassend mindestens ein Polynomfunktionsglied höherer Ordnung und/oder ein Taylor-Funktionselement und/oder ein Laplace-Funktionselement und/oder ein Fourier-Funktionselement und/oder ein Newton-Funktionselement, ermittelbar ist und die Auswerte- und Steuereinrichtung (12) dazu ausgebildet ist, den Anstellwinkel α durch Anwendung der Anstellwinkelsteuerfunktion f(α) einzustellen.

10. Spoilersystem nach Anspruch 9, **dadurch gekennzeichnet, dass** die Anstellwinkelsteuerfunktion f(α) mindestens eine Abhängigkeit des Anstellwinkels α von einer Windgeschwindigkeit und/oder einer Windrichtung und/oder einer Winddichte und/oder einem Windverteilungsprofil und/oder einer Luftverwirbelung und/oder von einer Position und/oder Anordnung des Fahrzeuges innerhalb einer Fahrzeugkolonne (1000) umfasst.

11. Spoilersystem nach einem der vorstehenden Ansprüche, **dadurch gekennzeichnet, dass** das mindestens eine Spoilerelement (16) in einem Heckspoiler und/oder in einem Frontspoiler und/oder in einem Radspoiler und/oder in einem Seitenspoiler und/oder in einer Einrichtung zur Motorluftzufuhr umfasst ist.

12. Kraftfahrzeug (100) mit mindestens einem Spoilersystem (10) nach einem der vorstehenden Ansprüche.

13. Verfahren zum Einstellen eines Anstellwinkels α eines Spoilerelements (16), das verstellbar an einem Fahrzeugbauteil (14) eines Kraftfahrzeuges angeordnet ist, wobei das Verfahren mindestens die folgenden Schritte umfasst: Bereitstellen von vorbestimmten CFD-Simulationsdaten des mindestens einen Spoilerelements (16); Ermitteln einer Windgeschwindigkeit (22) und/oder einer Windrichtung (23) und/oder einer Windböe und/oder eines Windverteilungsprofils (24) durch einen Lidar-Sensor (18); und Einstellen eines Anstellwinkels α des mindestens einen Spoilerelements (16) relativ zu dem Fahrzeugbauteil (14) basierend auf vorbestimmten CFD-Simulationsdaten des mindestens einen Spoilerelements (16) zumindest in Abhängigkeit von der ermittelten Windgeschwindigkeit (22) und/oder der ermittelten Windrichtung (23) und/oder der ermittelten Windböe und/oder dem ermittelten Windverteilungsprofil (24).

14. Verfahren zum Einstellen eines Anstellwinkels α eines Spoilerelements (16), das verstellbar an einem Fahrzeugbauteil (14) eines Kraftfahrzeuges angeordnet ist, wobei das Verfahren mindestens die folgenden Schritte umfasst: Bereitstellen von vorbestimmten CFD-Simulationsdaten des mindestens einen Spoilerelements (16); Ermitteln einer Position und/oder einer Anordnung des Kraftfahrzeuges innerhalb einer Fahrzeugkolonne (1000), die mehrere Fahrzeuge umfasst; und Einstellen eines Anstellwinkels α des mindestens einen Spoilerelements (16) relativ zu dem Fahrzeugbauteil (14) basierend auf vorbestimmten CFD-Simulationsdaten des mindestens einen Spoilerelements (16) in Abhängigkeit von der ermittelten Position und/oder Anordnung des Kraftfahrzeuges (100) innerhalb der Fahrzeugkolonne.
